# EUROPEAN PATENT APPLICATION

(11) **EP 1 691 524 A1**
(43) Date of publication of application: **16.08.2006**
(21) Application number: 05250830.6
(22) Date of filing: 14.02.2005
(51) Int. Cl.: H04L 29/06, H04L 29/08, H04L 12/28, H04L 12/56

(54) **Method for distributing transport sessions over multiple network interfaces**

(71) Applicant: LUCENT TECHNOLOGIES INC., Murray Hill, New Jersey 07974-0636 (US); Lucent Technologies Nederland B.V., 1200 BD Hilversum (NL)
(72) Inventor: Hoekstra, Gerard J., Amersfoort 3825BE (NL); Panken, Frans J.M., Bussum 1402PM (NL)
(74) Representative: Sarup, David Alexander

(57) **Abstract**

The present invention provides a method for distributing transport sessions over multiple network interfaces. The method includes establishing a plurality of network connections using a first plurality of network interfaces and providing a virtual network interface to an application layer, the virtual network interface being configured to provide access to the plurality of network connections.

## Description

### BACKGROUND OF THE INVENTION

### 1. FIELD OF THE INVENTION

This invention relates generally to telecommunication systems, and, more particularly, to distributing transport sessions over multiple network interfaces in telecommunication systems.

### 2. DESCRIPTION OF THE RELATED ART

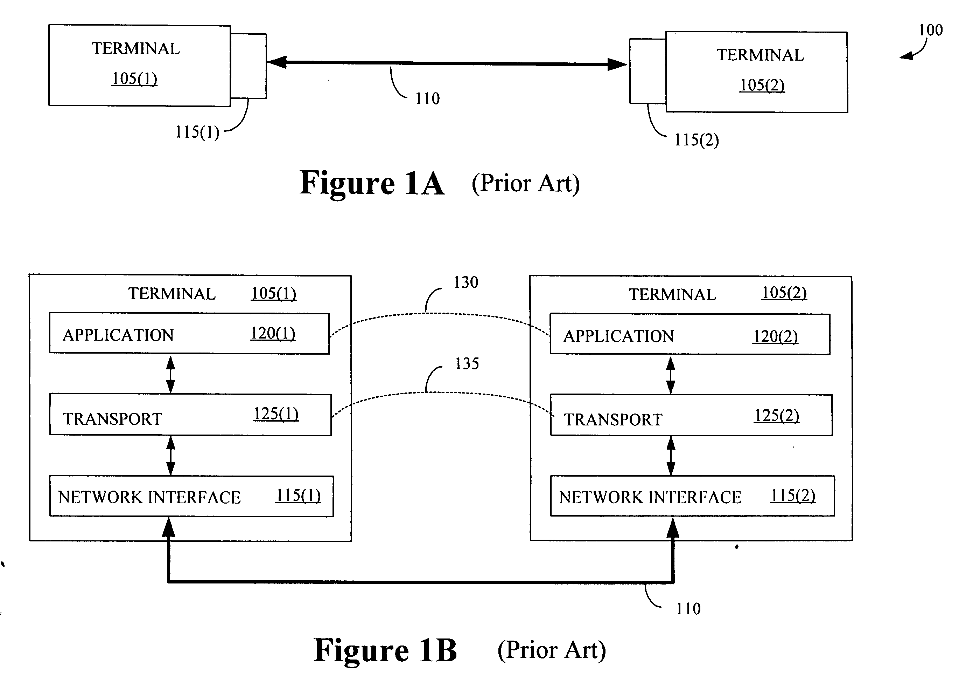

Each terminal in a telecommunication network includes a network interface, which may be used to form a network connection with one or more other terminals. Network connections form a logical association between connected terminals and the network connections between the terminals may be initiated and/or terminated on the network interface of the terminals. For example, Figure 1A conceptually illustrates a telecommunication network 100 including first and second terminals 105(1-2). The first terminal 105(1) may exchange information with the second terminal 105(2) over a network connection 110, which terminates at the network interfaces 115(1-2) of the first and second terminals 105(1-2). The first and second terminals 105(1-2) each have a network address associated with their network interface 115(1-2). The network connection 110 may operate according to any desirable wired and/or wireless protocol, such as an Internet protocol, a Universal Mobile Telecommunications System (UMTS) protocol, an IEEE 802.11 protocol, a Bluetooth protocol, and the like.

Figure 1B conceptually illustrates functional layers within the first and second terminals 105(1-2). Each terminal 105(1-2) includes an application layer 120(1-2) and a transport layer 125(1-2). The application layers 120(1-2) may interact with each other, as indicated by the dashed line 130. Accordingly, the transport layers 125(1-2) may include functionality to assure that the application layers 120(1-2) are able to interact. The application layers 120(1-2) and the transport layers 125(1-2) may exchange information using Service Data Units (SDUs). The transport layers 125(1-2) may interact with each other through the network interfaces 115(1-2), as indicated by the dashed line 135. The transport layers 125 (1-2) and the network interfaces 115 (1-2) may interact with each other by exchanging Network Data Units (NDUs). No interaction is indicated between the network interface layers 115 (1-2) because implementation of these layers may differ. For example, the terminal 105(1) may use a different network technology than the terminal 105(2).

Bottlenecks may form in the telecommunication network 100. For example, the application 120(1) may need to receive a large amount of data from the application 120(2) over the network connection 110. However, the data transfer rate may be limited by the throughput of one or both of the network interfaces 115(1-2), which may result in delays in receiving the data. For another example, multiple applications (not shown) in the terminals 105(1-2) may use a single network interface 115(1-2) to transmit and/or receive data over the network connection 110. Bottlenecks may then form as the multiple applications compete for capacity to receive and/or transmit data over the network connection 110. Many techniques have been proposed to increase the capacity of conventional wireless telecommunication networks.

Throughput of the telecommunication network 100 may be increased at the physical layer. Capacity may be increased by enhancing modulation schemes, media access control, and/or the transmission and/or reception capacity. For example, channel bonding has been used to increase the capacity of wireless local area networks. In channel bonding, multiple radiofrequency channels are combined to form a single logical channel with a higher capacity. For another example, multiple channels formed with the multiple antennas used in Multiple-Input-Multiple-Output (MIMO) systems may be combined to form one relatively large capacity channel. The single logical channel is administered by an associated network interface. Although combining channels to form a single channel may lead to large capacity gains, the physical circumstances must meet certain conditions. For example, MIMO systems perform well in a rich scattering environment, but may not perform as well in low scattering environments.

The capacity of the telecommunication network 100 may also be increased by modifying one or more application layers 120(1-2). For example, peer-to-peer (P2P) programs such as eDonkey and Kazaa can download a file that has been divided into multiple file segments. The file segments may be downloaded from different servers in parallel over a single network interface. The file segments are then combined to restore the original file. The functionality for achieving the performance improvement resides at the application layer 120 (1-2). Lower-level functional layers, such as the transport layer 125(1-2), operate as if multiple applications are receiving the file segments. However, application-level modifications may still be limited by the capacity of the network interface 115(1-2).

Modifications to a data link layer may also be used to increase capacity of the telecommunication network 100. For example, MultiNet is a virtualization architecture for wireless local area network cards that may enable a user to connect his or her machine to multiple wireless networks using a single wireless local area network card, *i.e.* a single network interface. In operation, MultiNet exposes multiple virtual adapters for each underlying wireless network card. A network hopping schemes then switches the wireless card across the desired wireless networks, each of which may provide a separate network stream. However, MultiNet may become unstable and oscillate between the network streams, at least in part because MultiNet maps a single transport session associated with a single network interface on to multiple network streams.

The present invention is directed to addressing the effects of one or more of the problems set forth above.

### SUMMARY OF THE INVENTION

The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

In one embodiment of the present invention, a method is provided for distributing transport sessions over multiple network interfaces. The method includes establishing a plurality of network connections using a first plurality of network interfaces and providing a virtual network interface to an application layer, the virtual network interface being configured to provide access to the plurality of network connections.

### BRIEF DESCRIPTION OF THE DRAWINGS

The invention may be understood by reference to the following description taken in conjunction with the accompanying drawings, in which like reference numerals identify like elements, and in which:
Figure 1 A conceptually illustrates a conventional wireless telecommunication network including first and second terminals;
Figure 1 B conceptually illustrates functional layers within the conventional terminals shown in Figure 1A;
Figure 2 shows one exemplary embodiment of the wireless telecommunications system, in accordance with the present invention;
Figures 3A, 3B, and 3C conceptually illustrate three exemplary embodiments of wireless telecommunication systems that allow one or more terminals to form a virtual network connection using a plurality of network connections via a plurality of network interfaces, in accordance with the present invention; and
Figure 4 conceptually illustrates one exemplary embodiment of a terminal that may be used in the wireless telecommunication systems shown in Figures 2 and 3A-B, in accordance with the present invention.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

Portions of the present invention and corresponding detailed description are presented in terms of software, or algorithms and symbolic representations of operations on data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Note also that the software implemented aspects of the invention are typically encoded on some form of program storage medium or implemented over some type of transmission medium. The program storage medium may be magnetic (e.g., a floppy disk or a hard drive) or optical (e.g., a compact disk read only memory, or "CD ROM"), and may be read only or random access. Similarly, the transmission medium may be twisted wire pairs, coaxial cable, optical fiber, or some other suitable transmission medium known to the art. The invention is not limited by these aspects of any given implementation.

The present invention will now be described with reference to the attached figures. Various structures, systems and devices are schematically depicted in the drawings for purposes of explanation only and so as to not obscure the present invention with details that are well known to those skilled in the art. Nevertheless, the attached drawings are included to describe and explain illustrative examples of the present invention. The words and phrases used herein should be understood and interpreted to have a meaning consistent with the understanding of those words and phrases by those skilled in the relevant art. No special definition of a term or phrase, *i.e.,* a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

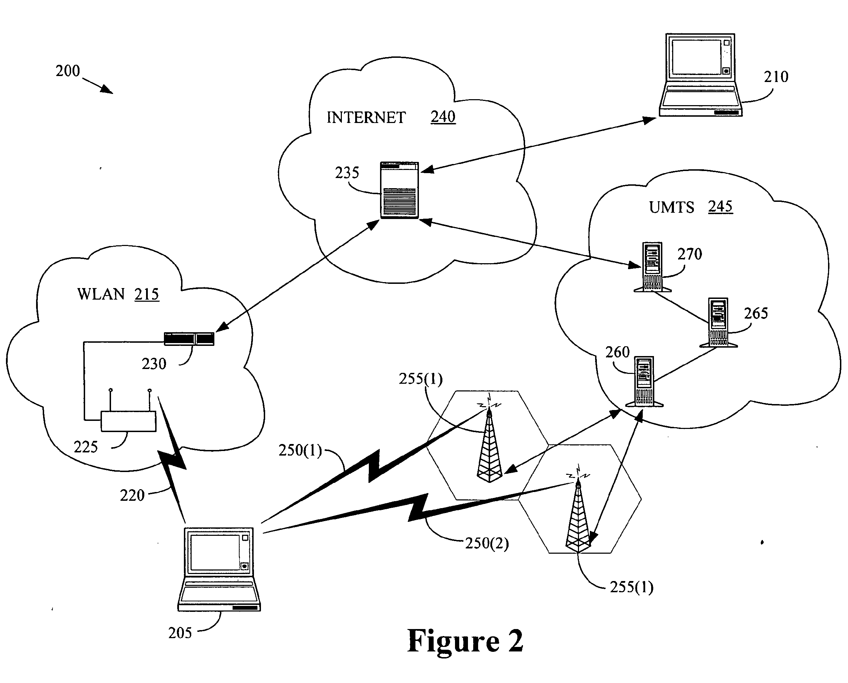

Referring now to Figure 2, one exemplary embodiment of a wireless telecommunications system 200 is shown. Although the present invention will be described in the context of the wireless telecommunications system 200, persons of ordinary skill in the art having benefit of the present disclosure should appreciate that the present invention is not limited to wireless telecommunications systems. In alternative embodiments, the present invention may be implemented in wired telecommunications systems or systems that include a combination of wired and wireless technologies.

In the illustrated embodiment, the wireless telecommunication system 200 may be used to form a network connection between the terminals 205, 210. The terminals 205, 210 may be any desirable device capable of exchanging information via the wireless telecommunication system 200. Exemplary terminals 205, 210 include, but are not limited to, mobile phones, personal data assistants, text messaging devices, laptop computers, desktop computers, and the like. As used herein, the term "terminal" refers to any device that terminates a network connection. Accordingly, the terminals 205, 210 may also include devices such as access points, base stations, node-Bs, servers, network controllers, and the like. In various embodiments, the wireless telecommunication system 200 may include any desirable number of terminals 205, 210.

The terminal 205 includes a plurality of network interfaces (not shown in Figure 2). As used herein, the term "network interface" refers to the software and/or hardware used to define one or more network primitives that enable the terminal 205 to communicate over a particular network using a specific network technology. For example, network interfaces may be used to define network primitives for communication over a local area network (LAN), a wireless local area network (WLAN), a Universal Mobile Telecommunication System (UMTS) network, a Global System for Mobile telecommunications (GSM) network, and the like. The network interface enables communication between devices, such as the terminal 205, via the associated network. The network interface may use network protocols to route packets from source to destination, and different network interfaces may utilize different network protocols. Accordingly, in some embodiments, a converter (not shown) that transforms the protocol information may be required to realize end-to-end network layer communication. The network interface also terminates the associated network technology and converts lower layer information and associated data to a form that may be used by higher layers. For example, a network interface may convert physical layer information and associated data to transport and/or application layer information using a data link layer. In some embodiments, the network interface may include one or more physical interfaces (e.g. an antenna and/or a connector), as well as one or more data link layer protocols, which may transform information into physical signals (and vice versa) that appear free of transmission errors. The terminal 210 also includes one or more network interfaces.

The plurality of network interfaces in the terminal 205, as well as the one or more network interfaces in the terminal 210, enables the terminal 205 to form one or more network connections with the terminal 210 using one or more networks. In the illustrated embodiment, the terminal 205 includes at least one network interface that enables the terminal 205 to communicate with a wireless local area network (WLAN) 215 via an air interface 220. The air interface 220 may operate according to any desirable protocol including, but not limited to, a Bluetooth protocol and/or an IEEE 802.11 protocol. Accordingly, the terminal 205 may communicate with an access point 225 that may be connected to a router 230. The router 230 may provide a communication link to a server 235 in a wired and/or wireless network such as an Internet 240. The server 235 may form a communication link that completes the network connection to the terminal 210.

The terminal 205 may also include one or more network interfaces that enable the terminal 205 to communicate with a Universal Mobile Telecommunication System (UMTS) network 245. In the illustrated embodiment, the terminal 205 includes a plurality of network interfaces that enable the terminal 205 to form one or more air interfaces 250(1-2) with one or more node-Bs or base stations 255(1-2). One or more of the base stations 255(1-2) may then communicate with a radio network controller 260, which may communicate with the server 235 in the Internet 240 via a Gateway General Packet Radio Service (GPRS) Support Node (GGSN) 265 and a Serving GPRS Support Node (SGSN) 270. As noted above, the server 235 may form a communication link that completes the network connection from the terminal 205 to the terminal 210.

Although the wireless telecommunication system 200 shown in Figure 2 includes a wireless local area network 215 and a UMTS network 245 in communication with the Internet 240, persons of ordinary skill in the art should appreciate that the present invention is not limited to this specific embodiment. In alternative embodiments, the wireless telecommunication system 200 may include more or fewer networks of any desirable type. For example, the wireless telecommunication system 200 may only include the UMTS network 245, in which case the terminal 205 may include a plurality of network interfaces for communicating with the UMTS network 245 over a plurality of communication channels. For another example, the wireless telecommunication system 200 may include additional wired and/or wireless networks, such as an Internet, one or more intranets, a Global System for Mobile telecommunications (GSM) network, a Public Data Network (PDN), a Bluetooth network, and the like.

The terminal 205 is capable of using the plurality of network interfaces to establish network connections with the terminal 210 using more than one of the network interfaces. For example, the terminal 205 may use a WLAN network interface and a UMTS network interface to form network connections with the terminal 210 over the air interface 220 and the air interface 250(1). For another example, the terminal 205 may use multiple UMTS network interfaces (or multiple instances of a UMTS network interface) to form network connections with the terminal 210 over the air interfaces 250(1-2). In one embodiment, the multiple network interfaces may be used for both uplink and downlink communications. However, in alternative embodiments, a dedicated transmission network interface may be used for uplink communications and a dedicated reception network interface may be used for downlink communications. Persons of ordinary skill in the art having benefit of the present disclosure should appreciate that the number and/or type of network interfaces used to form the network connections, as well as the partitioning of uplink and/or downlink communications, are matters of design choice. Moreover, the number and/or type of network interfaces used to form the network connections, as well as the partitioning of the uplink and/or downlink communications, may vary during operation of the wireless telecommunication network 200.

The network connections formed through the network interfaces can be used to provide a virtual network interface to hardware and/or software in an application layer of the terminal 205. In accordance with common usage in the art, the term "application layer" will be used herein to refer to a layer that supports application and/or end-user processes. In various embodiments, the application layer may provide services for file transfers, video, voice, e-mail, browsing, and the like. One exemplary application layer is Layer 7 of the Open System Interconnection (OSI) model. The virtual network interface allows the application layer to transmit and/or receive information through the plurality of network interfaces as if the application layer was interacting with a single network interface over a single network connection, as will be discussed in detail below. In embodiments in which the terminal 210 also includes multiple network interfaces, a virtual network interface may also be provided to hardware and/or software in an application layer of the terminal 210.

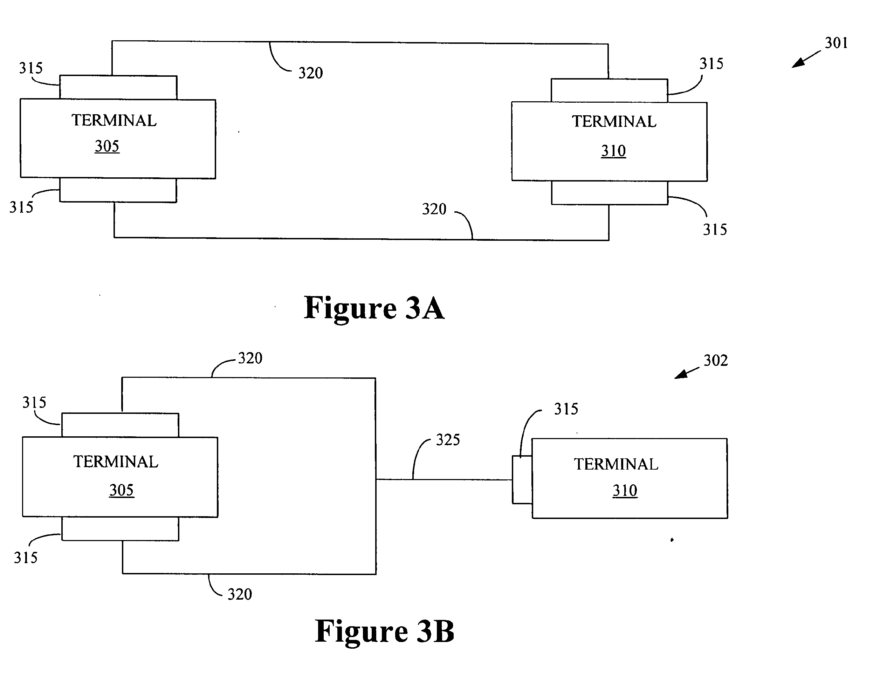

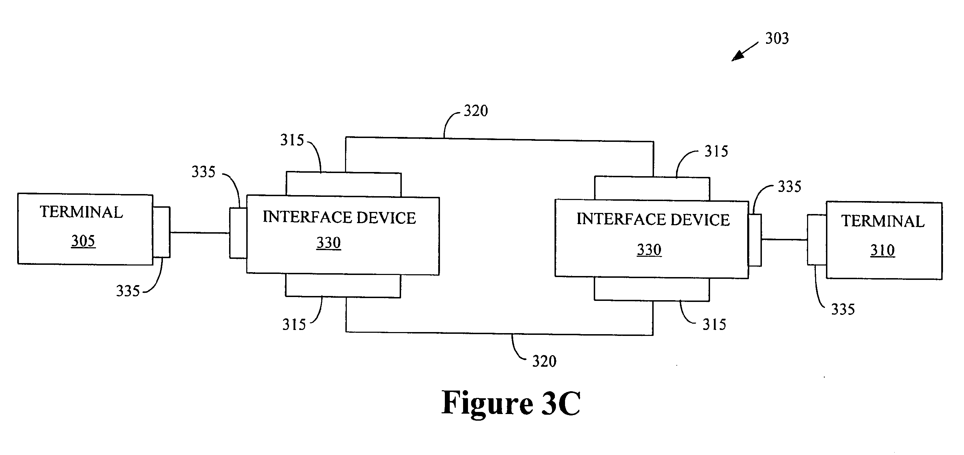

Figures 3A, 3B, and 3C conceptually illustrate three exemplary embodiments of wireless telecommunication systems 301, 302, 303 that allow one or more terminals to form a virtual network interface using a plurality of network connections via a plurality of network interfaces. In the interest of clarity, only two network connections will be shown in the exemplary embodiments of the wireless telecommunication systems 301, 302, 303. However, persons of ordinary skill in the art having benefit of the present disclosure should appreciate that alternative embodiments of the present invention may include more than two network connections.

Figure 3A conceptually illustrates the first exemplary embodiment of the wireless telecommunication system 301. In the illustrated embodiment, the wireless telecommunication system 301 includes two terminals 305, 310. Each of the terminals 305, 310 includes two network interfaces 315, which may be used to form two network connections 320 between the terminals 305, 310. The two network connections 320 may be used to provide one or more virtual network interfaces to application layers in the terminals 305, 310.

Figure 3B conceptually illustrates the second exemplary embodiment of the wireless telecommunication system 302. In the illustrated embodiment, the wireless telecommunication system 302 includes two terminals 305, 310. The terminal 305 includes two network interfaces 315 and the terminal 310 includes a single network interface 315. Accordingly, two network connections 320 may be used to provide a virtual network interface to an application layer in the terminal 305. The two network connections 320 are routed to a single network connection 325 by intermediate entities (not shown) in the wireless telecommunication system 302.

Figure 3C conceptually illustrates the third exemplary embodiment of the wireless telecommunication system 303. In the illustrated embodiment, the wireless telecommunication system 303 includes two terminals 305, 310 that are coupled to interface devices 330 via interfaces 335. The interface devices 330 each include two network interfaces 315. By the network interfaces 315 may be used to form two network connections 320, which the interface devices 330 may use to form a virtual network interface. Information is transmitted and/or received to the virtual network interface may be provided to an application layer in the terminals 305, 310 via the interfaces 335.

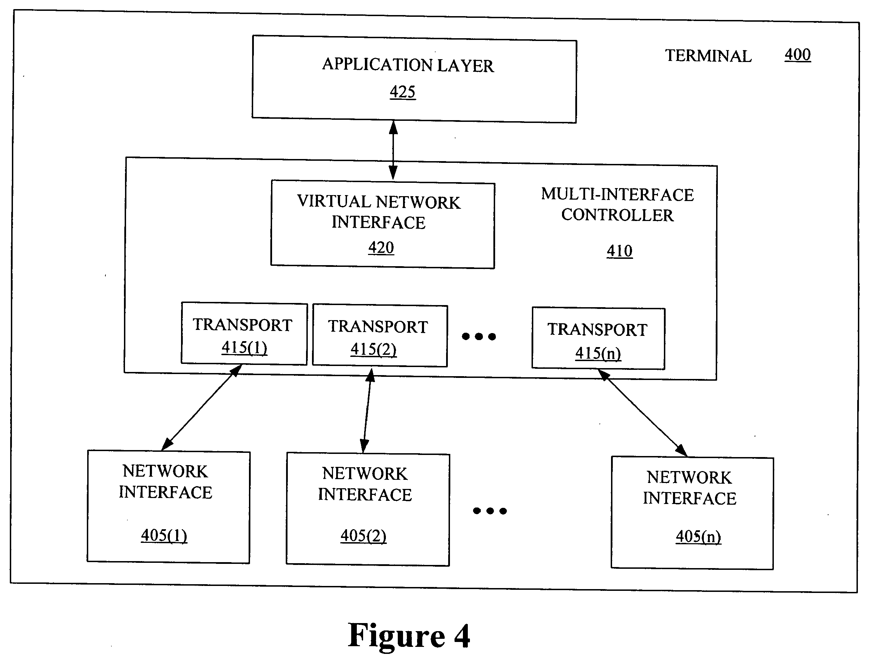

Figure 4 conceptually illustrates one exemplary embodiment of a terminal 400 that may be used in the wireless telecommunication systems 200, 301, 302, 303 shown in Figures 2 and 3A-C. In the illustrated embodiment, the terminal 400 includes a plurality of network interfaces 405(1-n). As discussed above, the number and/or type of network interface 405(1-n) are matters of design choice. For example, the terminal 400 may include one or more network interfaces 405(1-n) that may be used to interface with wired and/or wireless networks including, but not limited to, Internets, intranets, local area networks, UMTS networks, GSM networks, IEEE 802.11 networks, Bluetooth networks, and the like. In various alternative embodiments, the network interfaces 405(1-n) may be implemented in separate devices, may be combined in a single device, or maybe some combination of individual devices and combination devices. For example, a wireless local area network interface card may be capable of using multiple non-overlapping frequency channels to form more than one network connection. Each of these logically separated channels are associated with a corresponding network interface 405(1-n) and thus may be used in parallel.

In one embodiment, the network interfaces 405(1-n) may be network interfaces for a Multiple-In-Multiple-Out (MIMO) network. For example, each network interface 405(1-n) may be associated with an antenna and/or a communication channel of the MIMO network. In some circumstances, such as when there is insufficient scattering in the vicinity of the MIMO base stations or other access networks, non-overlapping channels may be used.

A multi-interface controller 410 is used to control operation of the network interfaces 405(1-n). In one embodiment, the multi-interface controller 410 forms a plurality of transport sessions 415(1-n), which are associated with a corresponding one of the network interfaces 405(1-n). The transport sessions 415(1-n) may communicate with the network interfaces 405(1-n) by exchanging Network Data Units (NDUs). Although Figure 4 shows a single transport session 415(1-n) associated with each network interface 405(1-n), persons of ordinary skill in the art should appreciate that the present invention is not so limited. In some embodiments, or the one transport session 415(1-n) may be associated with a network interface 405(1-n). Moreover, not every network interface 405(1-n) may have an associated transport session 415(1-n). For example, an idle network interface 405(1-n) may not have an associated transport session 415(1-n).

The multi-interface controller 410 can form a virtual network interface 420 between an application layer 425 and a plurality of the network interfaces 405(1-n) by using the plurality of transport sessions 415(1-n). In one embodiment, the application layer 425 and the multi-interface controller 410 may communicate by exchanging Service Data Units (SDUs). Since the application layer 425 communicates with the multi-interface controller 410 through the virtual network interface 420, details from the different transport sessions 415(1-n) and/or network interfaces 405(1-n) may be hidden from the application layer 425. Accordingly, the amount of information that may be transmitted to, and received by, the application layer 425 via the virtual network interface 420 may be increased without modifying the hardware and/or software used to implement the application layer 425.

The multi-interface controller 410 may manage multiple transport sessions 415(1-n) to increase the information transfer speed through the virtual network interface 420. In one embodiment, a relatively low capacity transport session 415(1) may be used to transmit signaling information and/or requests for data from the application layer 425 and a relatively high capacity transport session 415(2) may be used to receive the data that was requested by the application layer 425. For example, HTTP requests from a user may be transmitted over a UMTS networks and responses to these requests may be received over a public wireless local area network. In another embodiment, upstream voice packets may be transmitted using a first network interface 405(1) and downstream packets may be received over a second network interface 405(2). In yet another embodiment, the multi-interface controller 410 may also use the multiple transport sessions 415(1-n) to facilitate a transparent hand over, e.g. between the transport sessions 415(1-2), when a user is roaming through different networks. For example, two network interfaces 405(1-2) may be communicating with different base stations (or even different networks) during a hand over. The multi-interface controller 410 may then gradually increase the amount of traffic over the network interface 405(1-2) that has the best signal strength, which may result in a nearly seamless and uninterrupted hand over.

By implementing one or more embodiments of the invention described above, the throughput of existing networks may be increased without changing the network between the network interfaces. The total capacity of network connections between application layers may also be increased without modifying the hardware and/or software used to implement the application layers.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope and spirit of the invention. Accordingly, the protection sought herein is as set forth in the claims below.

## Claims

1. A method, comprising:
establishing a plurality of network connections using a first plurality of network interfaces; and
providing a virtual network interface to an application layer, the virtual network interface being configured to provide access to the plurality of network connections.

2. The method of claim 1, comprising concurrently transmitting information over more than one of the plurality of network connections via the first plurality of network interfaces.

3. The method of claim 1, comprising concurrently receiving information over more than one of the plurality of network connections via the first plurality of network interfaces.

4. The method of claim 1, comprising transmitting information via at least one dedicated transmission network interface selected from the first plurality of network interfaces and receiving information via at least one dedicated reception network interface selected from the first plurality of network interfaces.

5. The method of claim 4, comprising concurrently receiving and transmitting information via the at least one dedicated reception network interface and the at least one dedicated transmission network interface, respectively.

6. The method of claim 1, wherein establishing the plurality of network connections comprises establishing the plurality of network connections according to a plurality of protocols, wherein establishing the plurality of network connections according to the plurality of protocols comprises establishing a first network connection according to a first protocol, the first protocol being at least one of an Internet protocol, a Universal Mobile Telecommunication System (UMTS) protocol, a Global System for Mobile telecommunications (GSM) protocol, a Bluetooth protocol, and an IEEE 802.11 protocol, and establishing a second network connection according to a second protocol that is different than the first protocol.

7. The method of claim 6, wherein establishing the first network connection according to the first protocol and establishing the second network connection according to the second protocol comprises concurrently establishing the first and second network connections according to the first and second protocols, respectively.

8. The method of claim 1, wherein establishing the plurality of network connections using the first plurality of network interfaces comprises establishing the plurality of network connections using a first plurality of network interfaces associated with a terminal or an interface device coupled to the terminal.

9. The method of claim 1, wherein providing the virtual network connection to the application layer comprises associating a plurality of transport sessions with the plurality of network interfaces and selecting at least one of the transport sessions.

10. The method of claim 9, wherein selecting at least one of the transport sessions comprises selecting at least one of the transport sessions based on at least one signal strength associated with at least one of the transport sessions during a hand off from one transport session to another transport session.
